# EUROPÄISCHE PATENTANMELDUNG

(11) **EP 2 522 842 A1**
(43) Veröffentlichungstag der Anmeldung: **14.11.2012**
(21) Anmeldenummer: 11003962.5
(22) Anmeldetag: 13.05.2011
(51) Int. Cl.: F02F 1/24, F02P 23/04

(54) **Zylinderkopf für Brennkraftmaschine**

(71) Anmelder: GE Jenbacher GmbH & Co OHG, 6200 Jenbach (AT)
(72) Erfinder: Gruber, Friedrich, 6283 Hippach (DE)
(74) Vertreter: Gangl, Markus

(57) **Zusammenfassung**

Zylinderkopf (1) für eine Brennkraftmaschine, insbesondere Gasmotor, mit einem Zündkerzenschacht (2), wobei im Zündkerzenschacht (2) eine Laserzündkerze (3) angeordnet ist, wobei die Laserzündkerze (3) ein Zündkerzengehäuse (4) und einen innerhalb des Zündkerzengehäuses (4) befindlichen Festkörperlaser (5) umfasst, wobei der Zylinderkopf (1) eine Unterseite (6) aufweist, durch die in Einbaulage des Zylinderkopfs (1) ein Brennraum (B) der Brennkraftmaschine begrenzbar ist, wobei der Festkörperlaser (5) in einem der Unterseite (6) des Zylinderkopfs (1) abgewandten oberen Endbereich des Zündkerzenschachts (2) angeordnet ist.

## Beschreibung

Die Erfindung betrifft einen Zylinderkopf für eine Brennkraftmaschine, insbesondere Gasmotor, mit einem Zündkerzenschacht, wobei im Zündkerzenschacht eine Laserzündkerze angeordnet ist, wobei die Laserzündkerze ein Zündkerzengehäuse und einen innerhalb des Zündkerzengehäuses befindlichen Festkörperlaser umfasst, wobei der Zylinderkopf eine Unterseite aufweist, durch die in Einbaulage des Zylinderkopfs ein Brennraum der Brennkraftmaschine begrenzbar ist.

Derartige Zylinderköpfe sind im Stand der Technik bereits bekannt. Eine in einem Zündkerzenschacht eines Zylinderkopfs angeordnete Laserzündkerze ist dabei typischerweise im Bereich des brennraumseitigen Endes des Zylinderkopfs befestigt und wird komplett vom Zündkerzenschacht aufgenommen, d.h. sie ragt nicht über diesen hinaus. Herkömmliche Laserzündkerzen weisen typischerweise eine verhältnismäßig geringe Länge auf, da es ein Bestreben ist, eine Laserzündkerze möglichst kurz und kompakt zu bauen, um insbesondere geringe Abstände zwischen den optischen Elementen (z.B. Festkörperlaser, Aufweiteoptik, Einkoppeloptik, Brennraumfenster) der Laserzündkerze zu erzielen. Dadurch, dass herkömmliche Laserzündkerzen eine verhältnismäßig geringe Länge aufweisen, ist ein im Inneren eines Zündkerzengehäuses befindlicher Festkörperlaser in verstärktem Maße der im zugeordneten Brennraum einer Brennkraftmaschine erzeugten Wärme ausgesetzt. Als Festkörperlaser dient häufig ein Laserkristall, dessen Lebensdauer signifikant von der Arbeitstemperatur abhängt. Je höher die Temperatur, desto kürzer die Standzeit. Des Weiteren sinkt mit zunehmender Arbeitstemperatur der optische Wirkungsgrad des Laserkristalls erheblich. Ein weiterer Aspekt ist, dass die Wellenlänge einer Pumplichtquelle, die den Laserkristall speist, fein mit der Wellenlänge des Laserkristall abgestimmt werden muss, um eine möglichst gute Ausbeute des Energieumsetzungspotentiales zu erzielen. Eine geringe Abweichung der Wellenlänge durch eine erhöhte Arbeitstemperatur des Laserkristalls kann bereits zu messbaren Einbußen in der Pulsleistung führen. Daher sind herkömmliche Laserzündkerzen häufig mit aufwändigen Kühleinrichtungen versehen.

Ein weiteres Problem der herkömmlichen Anordnung einer Laserzündkerze im Zündkerzenschacht eines Zylinderkopfes liegt darin, dass die Laserzündkerze nur im Bereich des Zylinderkopfbodens in den Zylinderkopf eingeschraubt wird. Das brennraumabgewandte Ende der Laserzündkerze ist nicht weiter im Zündkerzenschacht fixiert und kann daher bei Auftreten von mechanischen Schwingungen bzw. Vibrationen frei schwingen. Dies ist nachteilig für die sensible Optik der Laserzündkerze und kann zu Beschädigungen der Laserzündkerze führen.

Aufgabe der Erfindung ist es, die vorbeschriebenen Nachteile zu vermeiden und einen gegenüber dem Stand der Technik verbesserten Zylinderkopf anzugeben. Es soll insbesondere erreicht werden, den Wärmeeintrag vom Brennraum auf den Laserkristall einer Laserlichterzeugungsvorrichtung der Laserzündkerze zu minimieren. Weiters soll ein freies Schwingen der Laserzündkerze im Zündkerzenschacht bei Auftreten von mechanischen Schwingungen oder Vibrationen vermieden werden.

Dies wird erfindungsgemäß durch die Merkmale des Patentanspruchs 1 gelöst. Weitere vorteilhafte Ausgestaltungen der Erfindung sind in den abhängigen Unteransprüchen angegeben.

Gemäß der Erfindung ist also vorgesehen, dass der Festkörperlaser in einem der Unterseite des Zylinderkopfs abgewandten oberen Endbereich des Zündkerzenschachts angeordnet ist.

Die Laserlichterzeugungsvorrichtung einer Laserzündkerze umfasst typischerweise einen Pulslaser, beispielsweise einen Festkörperlaser in Form eines Laserkristalls, der durch eine Pumplichtquelle gespeist werden kann. Durch die Anordnung des Festkörperlasers im oberen Endbereich des Zündkerzenschachts ist dieser so weit wie möglich vom der Laserzündkerze zugeordneten Brennraum einer Brennkraftmaschine entfernt, wodurch sich der Wärmeeintrag aus dem Brennraum zum Festkörperlaser verringern lässt.

Gemäß einer besonders bevorzugten Ausführungsform kann vorgesehen sein, dass der Zündkerzenschacht im oberen Endbereich einen Befestigungsabschnitt, vorzugsweise ein Innengewinde, zur lagestabilen Fixierung der Laserzündkerze im Zündkerzenschacht aufweist und dass das Zündkerzengehäuse einen Befestigungsbereich zur lagestabilen Fixierung der Laserzündkerze im Zündkerzenschacht aufweist, wobei der Befestigungsbereich in Einbaulage der Laserzündkerze im Bereich des oberen Endbereichs des Zündkerzenschachts angeordnet ist. Dabei kann vorzugsweise vorgesehen sein, dass der Befestigungsbereich durch ein Zündkerzenaußengewinde gebildet ist, wobei das Zündkerzenaußengewinde mit einem korrespondierenden Innengewinde des Zündkerzenschachts in Eingriff bringbar ist.

Zur Gewährleistung einer optimalen und zuverlässigen Funktionsweise eines Festkörperlasers bzw. Laserkristalls, der integrierte optische Grenzflächen und Schalter aufweisen kann, ist es entscheidend, dass die Temperatur der Laserzündkerze am Einbauort des Laserkristalls möglichst niedrig gehalten wird. Bei großen Hochleistungsgasmotoren sind die den Brennraum begrenzenden Bauteile thermisch sehr hoch belastet. Dazu kommen oft lange Zündkerzenschächte, in die die Laserzündkerzen eingebaut sind und in denen die Wandtemperaturen bereits ca. 90°C betragen. Es ist daher wichtig, den Wärmeeintrag aus dem Brennraum möglichst gering zu halten und die Wärme aus dem Zündkerzengehäuse über eine möglichst große, wärmeableitende Kontaktfläche zur Zylinderkopfwand abzuführen. Dies wird beim vorgeschlagenen Zylinderkopf durch die in Einbaulage korrespondierenden Befestigungsabschnitt des Zündkerzenschachts und Befestigungsbereich des Zündkerzengehäuses erreicht. Grundsätzlich soll im Betrieb der Laserkristall keine höheren Temperaturen als ca. 130°C aufweisen, Optimal ist eine Betriebstemperatur zwischen 90 und 100°C.

Wenn im Zylinderkopf zumindest eine, vorzugsweise im oberen Endbereich des Zündkerzenschachts angeordnete, Kühleinrichtung vorgesehen ist, so kann durch die zusätzliche Befestigung der Laserzündkerze im oberen Endbereich des Zündkerzenschachts, beispielsweise durch Verschrauben, eine besonders effektive Wärmeabfuhr vom Zündkerzengehäuse in den Zylinderkopf erreicht werden. Dadurch kann insbesondere auch auf gesonderte Kühlvorrichtungen zur Kühlung des Laserkristalls verzichtet werden.

Durch die zusätzliche Befestigung der Laserzündkerze an ihrem brennraumabgewandten Endbereich kann darüber hinaus eine lagestabile Fixierung der Laserzündkerze im Zündkerzenschacht erreicht werden, sodass die Laserzündkerze bei Auftreten von mechanischen Schwingungen oder Vibrationen nicht mehr frei schwingen kann und somit eine Beschädigung der Laserzündkerze vermieden werden kann. Der Befestigungsbereich des Zündkerzengehäuses kann sich dabei zumindest im Ausmaß des doppelten Außendurchmessers des Zündkerzengehäuses im Bereich des Befestigungsbereichs entlang der Längserstreckung des Zündkerzengehäuses erstrecken.

In einer bevorzugten Ausführungsform der Erfindung kann zur lagestabilen Fixierung der Laserzündkerze im Zündkerzenschacht eine Verschraubhülse mit einem Außengewinde vorgesehen sein, wobei das Außengewinde mit einem korrespondierenden Innengewinde des Zündkerzenschachts in Eingriff bringbar ist. Als besonders vorteilhaft hat es sich dabei herausgestellt, wenn die Verschraubhülse eine Stirnfläche aufweist und das Zündkerzengehäuse einen zur Stirnfläche korrespondierenden Auflagesteg aufweist, wobei die Stirnfläche und der Auflagesteg in Einbaulage eine kraftschlüssige Verbindung zur lagestabilen Fixierung der Laserzündkerze bilden.

Der Einsatz einer Verschraubmutter oder Verschraubhülse ist insbesondere dann vorteilhaft, wenn die Laserzündkerze und ein über einen Lichtleiter mit der Laserzündkerze verbundenes Pumpmodul mit Pumplichtquelle als einstückige, vorgefertigte Baugruppe vorliegen. Eine solche Anordnung wird häufig unter Reinraumbedingungen hergestellt und als vorgefertigte Baugruppe verwendet. Wenn die Verschraubhülse eine Längserstreckung aufweist, wobei die Verschraubhülse eine, vorzugsweise schlitzförmige, Öffnung entlang der Längserstreckung aufweist, kann die Verschraubhülse einfach auf den Lichtleiter aufgefädelt werden, ohne die vorgefertigte Baugruppe demontieren zu müssen. Zur Befestigung der Laserzündkerze im Zündkerzenschacht braucht diese dann nicht mehr mitgedreht zu werden. Die Befestigung und lagestabile Fixierung der Laserzündkerze erfolgt durch die kraftschlüssige Verbindung der Stirnfläche der Verschraubhülse mit dem korrespondierenden Auflagesteg des Zündkerzengehäuses während des Einschraubens der Verschraubhülse in den Zylinderkopf. Die Laserzündkerze kann dadurch vom oberen Endbereich des Zündkerzenschachts aus verspannt werden, wodurch sich eine schwingungsresistente, steife Anordnung der Laserzündkerze im Zündkerzenschacht ergibt. Dadurch, dass das Zündkerzengehäuse bei der Befestigung der Laserzündkerze nicht mitgedreht wird, wirken kaum Scherkräfte auf das Zündkerzengehäuse, wodurch sich die Anforderungen an das Zündkerzengehäuse in Bezug auf Torsionssteifigkeit verringern lassen.

Schutz wird auch begehrt für eine Brennkraftmaschine mit mindestens einem Zylinderkopf nach einem der Ansprüche 1 bis 15.

Weitere Einzelheiten und Vorteile der vorliegenden Erfindung werden anhand der nachfolgenden Figurenbeschreibung erläutert. Dabei zeigt
- Fig. 1: ein Diagramm der Pulsenergie eines Laserkristalls in Abhängigkeit von der Kristalltemperatur,
- Fig. 2: ein Ausführungsbeispiel einer vorgeschlagenen Anordnung einer Laserzündkerze im Zündkerzenschacht eines Zylinderkopfs in einer Schnittdarstellung,
- Fig. 3: ein weiteres Ausführungsbeispiel einer Laserzündkerze im Zündkerzenschacht eines Zylinderkopfs,
- Fig. 4: den Einsatz einer Verschraubhülse zur lagestabilen Fixierung einer Laserzündkerze in einem Zündkerzenschacht eines Zylinderkopfs,
- Fig. 5a: eine perspektivische Ansicht einer vorgeschlagenen Verschraubhülse und
- Fig. 5b: eine Draufsicht auf die Verschraubhülse der Fig. 5a.

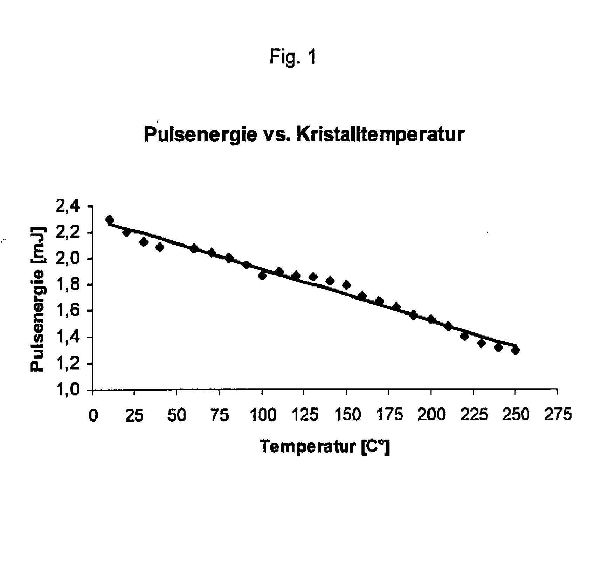

Fig. 1 zeigt ein Diagramm der Pulsenergie eines Laserkristalls in Abhängigkeit seiner Temperatur bei konstanter Pumpenergie einer den Laserkristall speisenden optischen Pumplichtquelle. Es ist deutlich zu erkennen, dass eine starke Abnahme der Pulsenergie bei höheren Temperaturen erfolgt. Die Abnahme der Pulsenergie in Abhängigkeit von der Temperatur ist dabei näherungsweise linear. Angestrebt werden Betriebstemperaturen des Laserkristalls von ca. 80 bis 100°C.

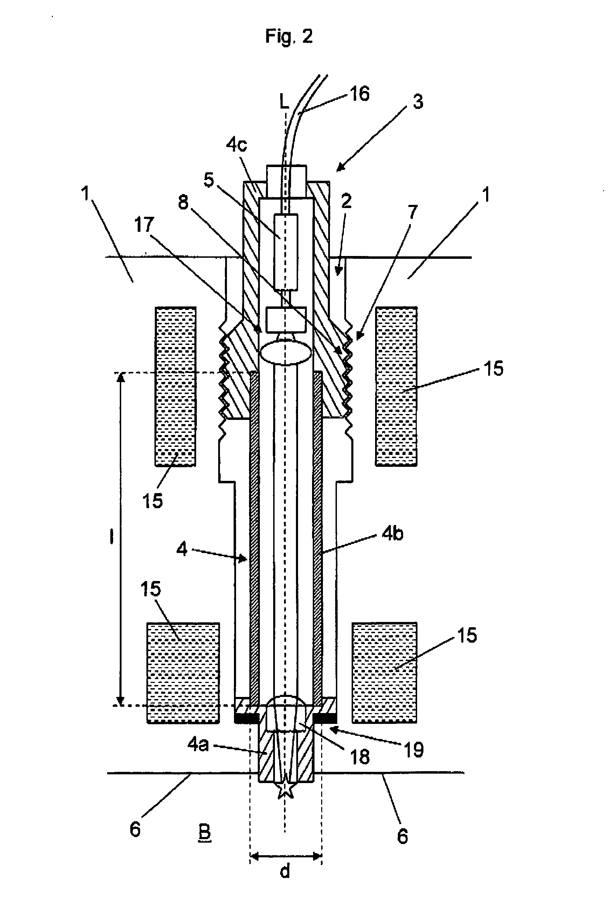

Fig. 2 zeigt eine Schnittdarstellung durch einen vorgeschlagenen Zylinderkopf 1, wobei in einem Zündkerzenschacht 2 des Zylinderkopfs 1 eine Laserzündkerze 3 angeordnet ist. Im Bereich des Zündkerzenschachts 2 sind im Zylinderkopf 1 mehrere Kühleinrichtungen 15 in Form von Kühlkanälen angeordnet, welche von einem Kühlmedium, beispielsweise Kühlwasser, durchströmt werden und dadurch den Zylinderkopf 1 kühlen. Der Zylinderkopf 1 weist einen Zylinderkopfboden bzw. eine Unterseite 6 auf, durch die in Einbaulage des Zylinderkopfs 1 ein Brennraum B einer hier nicht gezeigten Brennkraftmaschine begrenzbar ist. Mit anderen Worten bildet die Unterseite 6 eine (obere) Wandung eines Brennraums B einer Brennkraftmaschine, z.B. eines stationären Gasmotors.

Die Laserzündkerze 3 umfasst ein Zündkerzengehäuse 4, in dem ein Festkörperlaser 5 in Form eines Laserkristalls angeordnet ist. In Einbaulage der Laserzündkerze 3 befindet sich der Festkörperlaser 5 in einem oberen Endbereich des Zündkerzenschachts 2. An den Festkörperlaser 5 ist über einen optischen Lichtleiter 16 ein hier nicht gezeigtes Pumpmodul angeschlossen, welches eine Pumplichtquelle, beispielsweise in Form eines Halbleiterlasers, umfasst und den Festkörperlaser 5 optisch pumpt. Die hier nicht gezeigte optische Pumpeinrichtung bzw. das Pumpmodul erzeugt ein quasikontinuierliches Laserlicht geeigneter Wellenlänge, das über den optischen Lichtleiter 16 in Form eines Glasfaserkabels oder einer flexiblen Quarzfaserleitung zum Festkörperlaser 5 geführt wird und mit dem dieser aktiviert wird, bis sich ein Laserlichtpuls auslöst. Die aus dem Festkörperlaser 5 austretenden Lichtstrahlen werden über eine geeignete Aufweiteoptik 17 und über eine entsprechende Einkoppeloptik 18, welche ein laserlichtdurehlässiges Brennraumfenster umfasst, am brennraumseitigen Ende der Laserzündkerze 3 in den Brennraum B einer Brennkraftmaschine eingekoppelt, wobei im Brennpunkt der Strahlen ein Plasmafunke bzw. Zündfunke erzeugt wird.

Das Zündkerzengehäuse 4 ist im gezeigten Beispiel mehrteilig ausgeführt und umfasst - entlang der Längsachse L des Zündkerzengehäuses 4 - in Einbaulage einen brennraumseitigen Gehäuseteil 4a, einen brennraumabgewandten Gehäuseteil 4c und einen zwischen dem brennraumseitigen Gehäuseteil 4a und dem brennraumabgewandten Gehäuseteil 4c angeordneten mittleren Gehäuseteil 4b.

Der brennraumseitige Gehäuseteil 4a beinhaltet eine Einkoppeloptik 18 mit Brennraumfenster und bildet den brennraumseitigen Abschluss der Laserzündkerze 3, die über einen Dichtsitz 19 mit dem Zylinderkopfboden verbunden ist. Am Dichtsitz 19 erfolgt neben der Abdichtung des Brennraumdruckes eine Wärmeableitung aus dem brennraumseitigen Gehäuseteil 4a in den Zylinderkopf 1. Dadurch kann die Temperatur im Bereich der Einkoppeloptik 18 unterhalb etwa 200°C gehalten werden.

Der mittlere Gehäuseteil 4b in Form einer Distanzhülse ist so ausgeführt, dass der Wärmetransport vom Brennraum B zum Festkörperlaser 5 möglichst klein gehalten wird. Dazu kann der mittlere Gehäuseteil 4b möglichst dünnwandig ausgeführt sein und kann zudem zumindest teilweise, vorzugsweise vollständig, aus einem schlecht wärmeleitfähigen Material bestehen, z.B. mit einer Wärmeleitfähigkeit < 10 W/mK, vorzugsweise < 5 W/mK. Vorzugsweise kann vorgesehen sein, dass der mittlere Gehäuseteil 4b zumindest teilweise aus einem hochlegierten Stahl besteht, der eine relativ geringe Wärmeleitfähigkeit bei gleichzeitig sehr hoher Festigkeit gewährleistet, sodass eine sehr geringe Wandstärke realisierbar ist. Der mittlere Gehäuseteil 4b kann auch zumindest teilweise aus einem Spezialkeramikwerkstoff (z.B. Oxidkeramik PSZ) bestehen, der im Vergleich zu Stahl nur ca. ein Zehntel der Wärmeleitfähigkeit, jedoch ähnliche Werte für die Druckfestigkeit und die Wärmeausdehnung aufweist. Bei der Wahl der Wandstärke des mittleren Gehäuseteils 4b ist jedoch die erforderliche Struktursteifigkeit des Zündkerzengehäuses 4 zu berücksichtigen. Die Wandstärke kann dabei beispielsweise < 1,5 mm bei einem Metallwerkstoff und < 2 mm bei einem Keramikwerkstoff betragen.

Vorzugsweise kann vorgesehen sein, dass der mittlere Gehäuseteil 4b einen Durchmesser d und eine Längserstreckung l aufweist, wobei die Längserstreckung l mindestens dem vierfachen des Durchmessers d entspricht. Daraus ergibt sich eine längliche Bauform mit relativ großer Länge l, wodurch wiederum der Temperaturgradient und damit die Wärmeleitung entsprechend verringert werden können.

Im brennraumabgewandten Gehäuseteil 4c befinden sich in diesem Ausführungsbeispiel der Laserzündkerze 3 der Festkörperlaser 5 sowie die Aufweiteoptik 17. Der brennraumabgewandte Gehäuseteil 4c weist in diesem Beispiel einen Befestigungsbereich 8 in Form eines Zündkerzenaußengewindes auf, durch den die Laserzündkerze 3 mit dem Befestigungsabschnitt 7 des Zündkerzenschachts 2 in Form eines Innengewindes mit dem Zündkerzenschacht 2 verschraubt ist. Die dadurch gebildete Gewindeverbindung stellt zudem konstruktiv ein besonders günstiges Wärmeableitungselement dar.

Vorzugsweise besteht der brennraumabgewandte Gehäuseteil 4c zumindest teilweise, vorzugsweise vollständig, aus einem gut wärmeleitfähigen Material, z.B. mit einer Wärmeleitfähigkeit > 10 W/mK, vorzugsweise > 20 W/mK (z.B. Messing). Dadurch kann der brennraumabgewandte Gehäuseteil 4c möglichst gut die Temperatur des durch die Kühleinrichtungen 15 gekühlten Zylinderkopfs 1 im Bereich des Zündkerzenschachts 2 annehmen. Durch die vorgesehenen Kühleinrichtungen 15 kann damit ein Temperaturausgleich mit dem oberen Bereich des Zylinderkopfs 1 erfolgen. Darüber hinaus unterstützt das vom oberen Ende der Laserzündkerze 3 ausgehende Kraftmoment die dicht wirkenden Verbindungsstellen zwischen den Gehäuseteilen 4a, 4b und 4c, sodass die Betriebssicherheit der Laserzündkerze 3 dadurch verbessert werden kann.

Generell können die Gehäuseteile 4a, 4b und 4c beispielsweise durch Verschweißen, Verlöten oder Verkleben in einer im Stand der Technik bekannten Art und Weise verbunden werden, sodass eine hermetisch luftdichte Bauweise erzielt werden kann.

Als besonders vorteilhaft hat sich herausgestellt, wenn das Zündkerzengehäuse 4 insgesamt eine Länge von mindestens 12 cm, vorzugsweise mindestens 15 cm, aufweist.

Versuche der Anmelderin haben ergeben, dass die dargestellte Konstruktionsweise im Bereich des Festkörperlasers 5 ein Temperaturniveau von lediglich ca. 10°C höher als die Temperatur des Zylinderkopfs 1 im oberen Endbereich des Zündkerzenschachtes 2 gewährleistet. Damit liegt die Betriebstemperatur des Festkörperlasers 5 bei einer Kühlwassertemperatur von 90°C bei ca. 100°C. Durch die damit ermöglichte konstant niedrige Temperatur des Festkörperlasers 5 über alle Betriebszustände einer Brennkraftmaschine kann abgesehen vom verbesserten optischen Wirkungsgrad auch die Strahldichte des Laserlichtes und damit die Funkenenergie bei gleichbleibenden Bauteilabmessungen gesteigert werden. Insgesamt lässt sich mit dieser Anordnung die Temperatur des Festkörperlasers 5 innerhalb nur geringer Abweichungen zur Temperatur des Kühlmediums halten.

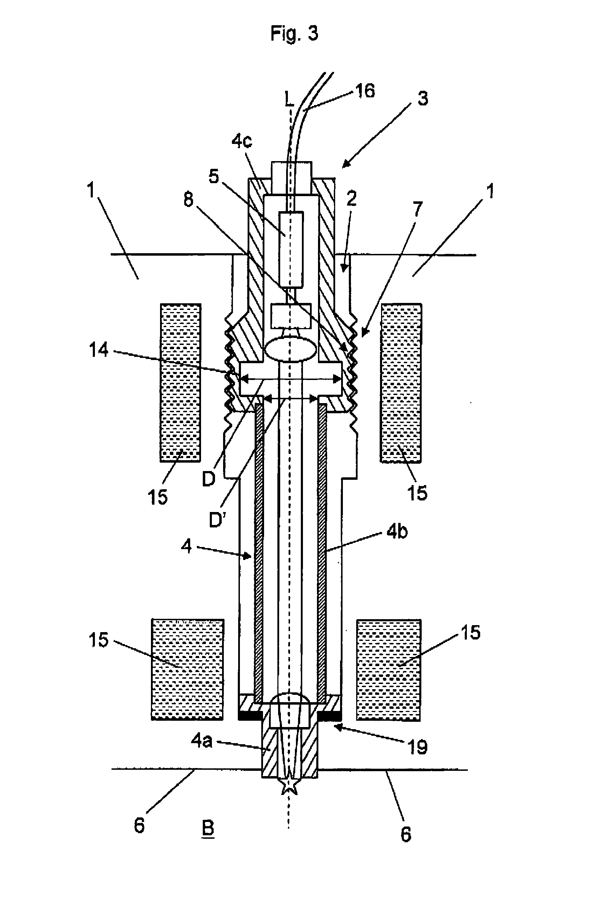

Fig. 3 zeigt eine Anordnung gemäß Fig. 2, wobei das Zündkerzengehäuse 4 im Bereich des Befestigungsbereichs 8 einen in Richtung einer Längsachse L des Zündkerzengehäuses 4 verlaufenden Abschnitt 14 mit einem gegenüber dem Innendurchmesser D' des brennraumabgewandten Gehäuseteils 4c vergrößerten lichten Durchmesser D aufweist. Konstruktiv ist an der Innenwandung des brennraumabgewandten Gehäuseteils 4c eine umlaufende Aussparung bzw. Nut ausgebildet, welche durch die dadurch erzielte Querschnittsverminderung den Wärmestrom in Richtung Festkörperlaser 5 reduzieren kann. Diese Aussparung kann dadurch auch als nutförmige Wärmestrombarriere betrachtet werden. Zusätzlich kann damit eine Erhöhung der Elastizität des Zündkerzengehäuses 4 bewirkt werden, sodass beispielsweise Längendehnungen des mittleren Gehäuseteils 4b innerhalb der elastischen Verformbarkeit dieser Nut aufgenommen werden können.

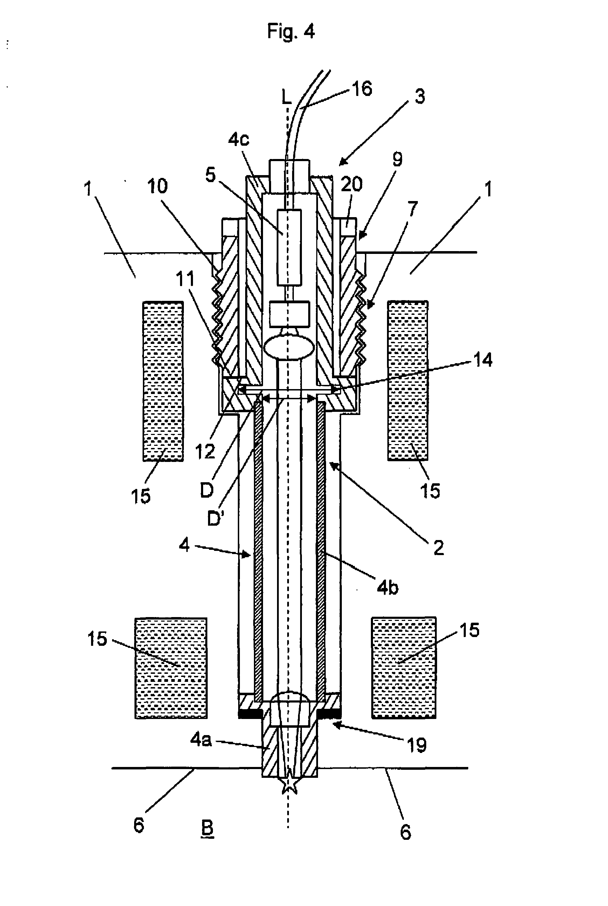

Fig. 4 zeigt den Längsschnitt einer weiteren vorgeschlagenen Anordnung einer Laserzündkerze 3 im Zündkerzenschacht 2 eines Zylinderkopfs 1. lm Unterschied zu den Beispielen gemäß Fig. 2 und Fig. 3 weist das Zündkerzengehäuse 4 dieser Laserzündkerze 3 kein eigenes Zündkerzenaußengewinde auf. Die Laserzündkerze 3 wird in diesem Beispiel über eine Verschraubmutter bzw. Verschraubhülse 9 im Zylinderkopf 1 befestigt. Aus fertigungstechnischen Gründen und aus Kostengründen ist es häufig von Vorteil, die Laserzündkerze 3, den damit verbundenen Lichtleiter 16 und ein mit dem Lichtleiter 16 verbundenes, hier nicht gezeigtes, Pumpmodul als eine vorgefertigte Einheit auszuführen. Eine solche vorgefertigte, meist nicht zerlegbare Einheit bzw. Baugruppe umfasst typischerweise ein mehrteiliges Zündkerzengehäuse 4 mit darin angeordnetem Festkörperlaser 5 und zugehörigen Optiken 17, 18, einen Lichtleiter 16 und ein mit dem Lichtleiter 16 verbundenes Pumpmodul mit Pumplichtquelle. Um eine solche Einheit im Zündkerzenschacht 2 eines Zylinderkopfs 1 zu befestigen, müsste die Laserzündkerze 3 samt Lichtleiter 16 und Pumpmodul in umständlicher Weise eingeschraubt werden. Durch die vorgesehene Verschraubhülse 9 kann dies verhindert werden, sodass nicht mehr die vorgefertigte Einheit bzw. das Zündkerzengehäuse 4, sondern nur mehr die Verschraubhülse 9 eingeschraubt werden muss. Dadurch lassen sich auch ungewünschte Spannungen bzw. Torsionsbeanspruchungen im Zündkerzengehäuse 4 vermeiden.

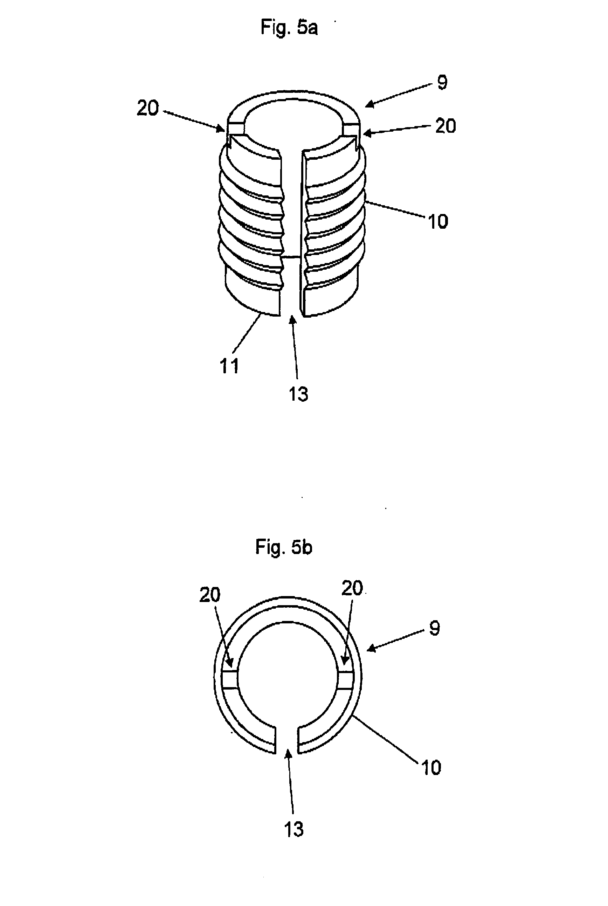

Die Verschraubhülse 9 ist im oberen Endbereich des Zündkerzenschachts 2 in den Zylinderkopf 1 eingeschraubt und drückt mit ihrer unteren Stirnfläche 11 gegen einen Auflagesteg 12 des Zündkerzengehäuses 4. Dadurch wird die Laserzündkerze 3 gegen den Dichtsitz 19 im Bereich des Zylinderkopfbodens gepresst. Die Verschraubhülse 9 weist entlang ihrer Längserstreckung eine schlitzförmige Öffnung 13 (siehe Fig. 5a) auf, sodass der Lichtleiter 16 einfach durchgeführt und die Verschraubhülse 9 über den brennraumabgewandten Gehäuseteil 4c der Laserzündkerze 3 gezogen werden kann. Um beispielsweise einen Gewindeschlüssel an der Verschraubhülse 9 ansetzen zu können, sind Aufnahmen 20 in Form von Nuten (siehe Fig. 5a) vorgesehen. Alternativ kann das obere Ende der Verschraubhülse 9 auch als Sechskant ausgeformt sein.

Zur zusätzlichen Behinderung des Wärmestroms sowie als elastisches Ausgleichselement weist der brennraumabgewandte Gehäuseteil 4c an seiner Innenwandung im Bereich des Abschnitts 14 eine umlaufende Nut auf. Diese stellt eine wirksame Wärmestrombarriere dar und nimmt die im Vergleich zum Zylinderkopf 1 unterschiedliche Wärmeausdehnung, insbesondere des wärmedämmenden mittleren Gehäuseteils 4b, auf. Insgesamt kann dadurch eine verhältnismäßig hohe Elastizität des Zündkerzengehäuses 4 erreicht werden, sodass zum Beispiel auch die Flächenpressung auf den Dichtsitz 19 nicht durch Setzvorgänge reduziert wird.

Fig. 5a zeigt eine perspektivische Ansicht einer vorgeschlagenen Verschraubhülse 9 und Fig. 5b zeigt eine entsprechende Draufsicht. Die Verschraubhülse 9 weist ein Außengewinde 10 zum Verschrauben der Verschraubhülse 9 mit einem korrespondierenden Innengewinde am Zündkerzenschacht 2 eines Zylinderkopfs 1 auf. lm oberen Endbereich der Verschraubhülse 9 sind zwei nutförmige Aufnahmen 20 vorgesehen, um einen Gewindeschlüssel an der Verschraubhülse 9 ansetzen zu können. Durch die ausgebildete, schlitzförmige Öffnung 13 entlang der Längserstreckung der Verschraubhülse 9 kann diese leicht auf den Lichtleiter 16 einer vorgefertigten, nicht zerlegbaren Baugruppe aufgesetzt werden. Mit Hilfe der unteren Stirnfläche 11 der Verschraubhülse 9 kann eine Laserzündkerze 3 gegen einen Dichtsitz 19 in einen Zylinderkopf 1 gepresst und zusätzlich im oberen Endbereich des Zündkerzenschachts 2 lagestabil fixiert werden (siehe beispielsweise Fig. 4).

## Patentansprüche

1. Zylinderkopf (1) für eine Brennkraftmaschine, insbesondere Gasmotor, mit einem Zündkerzenschacht (2), wobei im Zündkerzenschacht (2) eine Laserzündkerze (3) angeordnet ist, wobei die Laserzündkerze (3) ein Zündkerzengehäuse (4) und einen innerhalb des Zündkerzengehäuses (4) befindlichen Festkörperlaser (5) umfasst, wobei der Zylinderkopf (1) eine Unterseite (6) aufweist, durch die in Einbaulage des Zylinderkopfs (1) ein Brennraum (B) der Brennkraftmaschine begrenzbar ist, **dadurch gekennzeichnet, dass** der Festkörperlaser (5) in einem der Unterseite (6) des Zylinderkopfs (1) abgewandten oberen Endbereich des Zündkerzenschachts (2) angeordnet ist.

2. Zylinderkopf nach Anspruch 1, **dadurch gekennzeichnet, dass** der Zündkerzenschacht (2) im oberen Endbereich einen Befestigungsabschnitt (7), vorzugsweise ein Innengewinde, zur lagestabilen Fixierung der Laserzündkerze (3) im Zündkerzenschacht (2) aufweist.

3. Zylinderkopf nach Anspruch 1 oder 2, **dadurch gekennzeichnet, dass** das Zündkerzengehäuse (4) einen Befestigungsbereich (8) zur lagestabilen Fixierung der Laserzündkerze (3) im Zündkerzenschacht (2) aufweist, wobei der Befestigungsbereich (8) in Einbaulage der Laserzündkerze (3) im Bereich des oberen Endbereichs des Zündkerzenschachts (2) angeordnet ist.

4. Zylinderkopf nach Anspruch 3, **dadurch gekennzeichnet, dass** der Befestigungsbereich (8) durch ein Zündkerzenaußengewinde gebildet ist, wobei das Zündkerzenaußengewinde mit einem korrespondierenden Innengewinde des Zündkerzenschachts (2) in Eingriff bringbar ist.

5. Zylinderkopf nach einem der Ansprüche 1 bis 3, **dadurch gekennzeichnet, dass** zur lagestabilen Fixierung der Laserzündkerze (3) im Zündkerzenschacht (2) eine Verschraubhülse (9) mit einem Außengewinde (10) vorgesehen ist, wobei das Außengewinde (10) mit einem korrespondierenden Innengewinde des Zündkerzenschachts (2) in Eingriff bringbar ist.

6. Zylinderkopf nach Anspruch 5, **dadurch gekennzeichnet, dass** die Verschraubhülse (9) eine Stirnfläche (11) aufweist und das Zündkerzengehäuse (4) einen zur Stirnfläche (11) korrespondierenden Auflagesteg (12) aufweist, wobei die Stirnfläche (11) und der Auflagesteg (12) in Einbaulage eine kraftschlüssige Verbindung zur lagestabilen Fixierung der Laserzündkerze (3) bilden.

7. Zylinderkopf nach Anspruch 5 oder 6, **dadurch gekennzeichnet, dass** die Verschraubhülse (9) eine Längserstreckung aufweist, wobei die Verschraubhülse (9) eine, vorzugsweise schlitzförmige, Öffnung (13) entlang der Längserstreckung aufweist.

8. Zylinderkopf nach einem der Ansprüche 1 bis 7, **dadurch gekennzeichnet, dass** das Zündkerzengehäuse (4), vorzugsweise im Bereich des Befestigungsbereichs (8), zumindest einen in Richtung einer Längsachse (L) des Zündkerzengehäuses (4) verlaufenden Abschnitt (14) mit einem vergrößerten lichten Durchmesser (D) aufweist.

9. Zylinderkopf nach einem der Ansprüche 1 bis 8, **dadurch gekennzeichnet, dass** das Zündkerzengehäuse (4) eine Länge von mindestens 12 cm, vorzugsweise mindestens 15 cm, aufweist.

10. Zylinderkopf nach einem der Ansprüche 1 bis 9, **dadurch gekennzeichnet, dass** das Zündkerzengehäuse (4) mehrteilig ausgeführt ist.

11. Zylinderkopf nach Anspruch 10, **dadurch gekennzeichnet, dass** das Zündkerzengehäuse (4) eine Längsachse (L) aufweist, wobei das Zündkerzengehäuse (4) in Einbaulage entlang der Längsachse (L) zumindest einen brennraumseitigen Gehäuseteil (4a), einen brennraumabgewandten Gehäuseteil (4c) und einen zwischen dem brennraumseitigen Gehäuseteil (4a) und dem brennraumabgewandten Gehäuseteil (4c) angeordneten mittleren Gehäuseteil (4b) umfasst.

12. Zylinderkopf nach Anspruch 11, **dadurch gekennzeichnet, dass** der mittlere Gehäuseteil (4b) zumindest teilweise, vorzugsweise vollständig, aus einem schlecht wärmeleitfähigen Material besteht.

13. Zylinderkopf nach Anspruch 11 oder 12, **dadurch gekennzeichnet, dass** der mittlere Gehäuseteil (4b) einen Durchmesser (d) und eine Längserstreckung (l) aufweist, wobei die Längserstreckung (l) mindestens dem vierfachen des Durchmessers (d) entspricht.

14. Zylinderkopf nach einem der Ansprüche 11 bis 13, **dadurch gekennzeichnet, dass** der brennraumabgewandte Gehäuseteil (4c) zumindest teilweise, vorzugsweise vollständig, aus einem gut wärmeleitfähigen Material besteht.

15. Zylinderkopf nach einem der Ansprüche 1 bis 14, **dadurch gekennzeichnet, dass** im Zylinderkopf (1) zumindest eine, vorzugsweise im oberen Endbereich des Zündkerzenschachts (2) angeordnete, Kühleinrichtung (15) vorgesehen ist.

16. Brennkraftmaschine mit mindestens einem Zylinderkopf (1) nach einem der Ansprüche 1 bis 15.
